# EUROPÄISCHE PATENTSCHRIFT

(11) **EP 2 204 582 B1**
(45) Veröffentlichungstag und Bekanntmachung des Hinweises auf die Patenterteilung: **16.02.2011**
(21) Anmeldenummer: 08171649.0
(22) Anmeldetag: 15.12.2008
(51) Int. Cl.: F04B 43/04, G06F 1/20, F04F 7/00

(54) **Schwingmembranlüfter mit gekoppelten Teileinheiten, und Gehäuse mit einem derartigen Schwingmembranlüfter**
Vibrating membrane jet cooler with coupled partial units and housing with such a membrane jet cooler
Ventilateur à membrane vibratoire doté d'unités partielles couplées et boîtier doté d'un tel ventilateur à membrane vibratoire

(43) Veröffentlichungstag der Anmeldung: 07.07.2010
(73) Patentinhaber: Siemens Aktiengesellschaft, 80333 München (DE)
(72) Erfinder: Busch, Klaus, 92224, Amberg (DE); Scharf, Christian, 92263, Ebermannsdorf (DE); Wiesner, Christoph, 92224, Amberg (DE)

(56) Entgegenhaltungen:
- EP-A- 1 523 038
- EP-A- 1 722 412
- WO-A-2006/114934
- WO-A-2007/103384
- US-B1- 6 588 497

## Beschreibung

Es sind Lüfter bekannt, deren bewegliche Teile reibungsfrei und ohne Berührung zueinander gelagert sind. Deren Aufbau ist in gewisser Weise mit einem Lautsprecher vergleichbar. Lüfter dieser Art sind im englischen Sprachraum unter dem Begriff "Jet cooler" beziehungsweise "Jet Generator" bekannt geworden und werden nachfolgend als Schwingmembranlüfter bezeichnet.

Diese weisen eine in einem Gehäuse gehaltene Schwingmembran auf, welche von einem in einer Aktuatorkammer befindlichen Magnetsystem angeregt wird. Die von der Schwingmembran erzeugte Luftpulsierung wird nach außen abgegeben. Ist der Schwingmembranlüfter zum Beispiel im Inneren eines Elektronikgehäuses platziert, so verursacht er darin Luftverwirbelungen. Hiermit kann die zum Beispiel von Elektronikbauelementen und Prozessoren erzeugte Verlustwärme verwirbelt und von den Wärmequellen abgeführt werden. Weiterhin kann die Entwärmung von so genannten "Hot Spots" auf Leiterplatten und die natürliche Konvektion in Inneren eines Elektronikgehäuses gezielt unterstützt werden.

Aus der EP 1 722 412 A ist ein Schwingmembranlüfter mit zumindest zwei Teileinheiten bekannt, die jeweils eine Schwingmembran zum Erzeugen einer Luftpulsierung nach außen aufweisen, so wie es in Oberbegriff von Patentanspruch 1 definiert ist.

Aufgrund des berührungslosen Magnetantriebs der Schwingmembran unterliegen Lüfter dieser Bauart zwar keinem reibungsbedingten Verschleiß. In der Praxis hat sich jedoch gezeigt, dass Staubablagerungen die Bewegungsfreiheit der Elemente des Magnetantriebs behindern und damit die Lebensdauer einschränken können. Besteht zum Beispiel ein solcher Magnetantrieb aus einer Magnetscheibe mit einer Ringnut, in welche ein mit Spulenwicklung eintaucht, so kann die Ringnut allmählich verstopfen. Auf diese Weise kann die Schwingungsfähigkeit des ringförmigen Trägers und damit auch die Lüftungswirkung eingeschränkt werden.

Der Erfindung liegt somit die Aufgabe zu Grunde, einen bekannten Schwingmembranlüfter der oben angegebenen Art weiter so auszubilden, dass Funktionseinschränkungen aufgrund von allmählicher Verschmutzung vermieden werden können. Der Erfindung liegt weiterhin die Aufgabe zu Grunde, eine besonders vorteilhafte konstruktive Integration eines derartigen Schwingmembranlüfters in ein Gehäuse zu ermöglichen.

Die Aufgabe wird gelöst mit dem im Anspruch 1 angegebenen Schwingmembranlüfter. Dieser weist zumindest zwei Teileinheiten mit jeweils einer Schwingmembran auf, welche jeweils von einem Magnetsystem in einer Aktuatorkammer angeregt werden. Die von den Teileinheiten erzeugten Luftpulsierungen werden in üblicher Weise nach außen abgegeben. Erfindungsgemäß sind die Aktuatorkammern der Teileinheiten jeweils nach außen gekapselt und untereinander über Mittel zum Druckausgleich verbunden. Weiterhin werden die Magnetsysteme der Teileinheiten phasenverschoben angeregt.

Vorteilhafte weitere Ausführungen der Erfindung sind in den Unteransprüchen angegeben.

Der erfindungsgemäße Schwingmembranlüfter weist den besonderen Vorteil auf, dass die lufttechnisch gekoppelten Aktuatorkammern der Teileinheiten nach außen hin vollständig gekapselt sind. Trotz der Schwingungen der darin befindlichen Magnetsysteme ist somit auch zum Druckausgleich kein Luftaustausch mit der Umgebung notwendig. Es kann somit auch kein Schmutz aus der Umgebung eingesaugt werden, und sich in den in den Aktuatorkammern befindlichen Magnetsystemen ablagern. Aufgrund der erfindungsgemäßen phasenverschobenen Anregung der Magnetsysteme und der damit verbundenen Schwingmembranen ist zu jedem Zeitpunkt ein Ausgleich von Unter- bzw. Überdrücken in dem System der lufttechnisch gekoppelten Aktuatorkammern über die Druckausgleichsmittel gewährleistet.

Ist zum Beispiel der erfindungsgemäße Schwingmembranlüfter als ein Doppelsystem von zwei gekoppelten Teileinheiten ausgeführt, so werden die Magnetsysteme der Teileinheiten vorteilhaft im Gegentakt angesteuert, d.h. mit einer Phasenverschiebung von 180°. Die Schwingmembranen der Teileinheiten schwingen somit im Gegentakt. Während also die Schwingmembran der einen Teileinheit vom dazugehörigen Magnetsystem nach außen gedrückt wird und damit einen Unterdruck in der jeweiligen Aktuatorkammer hervorruft, wird die Schwingmembran der anderen Teileinheit in diesem Moment vom dazugehörigen Magnetsystem nach innen gezogen und damit ein Überdruck in der jeweiligen Aktuatorkammer hervorgerufen. Erfindungsgemäß ermöglichen die Mittel zum Druckausgleich zwischen den Aktuatorkammern in diesem Fall eine unter Umständen vollständige Kompensation von Unter- und Überdrücken im Gesamtsystem.

Die Mittel zum Druckausgleich können zum Beispiel in Form eines Druckausgleichskanals ausgeführt sein. Weisen die Teileinheiten zum Beispiel separate Teilgehäuse auf, so kann dieser Druckausgleichskanal in Form von aneinander angrenzenden Öffnungen in den Seitenwänden der Teilgehäuse ausgeführt sein. Bei einer anderen Ausführung ist es auch möglich, die Mittel zum Druckausgleich in Form einer Membran auszuführen, welche zwischen den Aktuatorkammern der Teilgehäuse platziert ist. Bei einer weiteren Ausführung können die Aktuatorkammern der Teileinheiten auch über separate Druckausgleichsleitungen miteinander gekoppelt sein.

Selbstverständlich kann ein Schwingmembranlüfter gemäß der Erfindung auch mehr als zwei Teileinheiten aufweisen, welche entsprechend phasenverschobenen angeregt werden. Es ist vorteilhaft, wenn die Anzahl der Teileinheiten geradzahlig ist. In diesem Fall können die Teileinheiten in zwei Gruppen aufgeteilt werden, deren Magnetsysteme wiederum im Gegentakt angesteuert werden.

Mit einer Erhöhung der Anzahl der Teileinheiten kann natürlich die Lüftungsleistung des erfindungsgemäßen Schwingmembranlüfters gesteigert werden. Sind zudem die Aktuatorkammern in den Teilgehäusen der Teileinheiten zum Beispiel über Druckausgleichsleitungen miteinander verbunden, so können die einzelnen Teilgehäuse zum Beispiel im Inneren eines Elektronikgehäuses auch verteilt angeordnet werden. Der erfindungsgemäße Schwingmembranlüfter stellt dann quasi ein Netzwerk aus drucktechnisch gekoppelten und phasenverschoben angeregten Teileinheiten dar.

Die Aufgabe der Erfindung wird weiterhin durch das in Anspruch 4 angegebene Gehäuse gelöst.

Die Erfindung wird nachfolgend an Hand eines in der Figur dargestellten Ausführungsbeispiels näher erläutert.

Dabei ist in der Figur ein beispielhaftes Gehäuse 1, zum Beispiel ein Elektronikgehäuse im Schnitt dargestellt. Dieses weist zum Beispiel einen Boden 12 und zwei gegenüber liegende vertikale Seitenwände 11 auf. An der Oberseite 13 des Gehäuses 1 befindet sich beispielhaft eine in der Zeichenebene liegende Lüftungsöffnung 14. Hiermit werden ein natürlicher Luftaustausch mit der Umgebung und eine von Konvektion hervorgerufene Entlüftung ermöglicht. Allerdings können über diese Lüftungsöffnung 14 auch Schmutzpartikel in das Innere des Gehäuses 1 gelangen und sich darin ablagern.

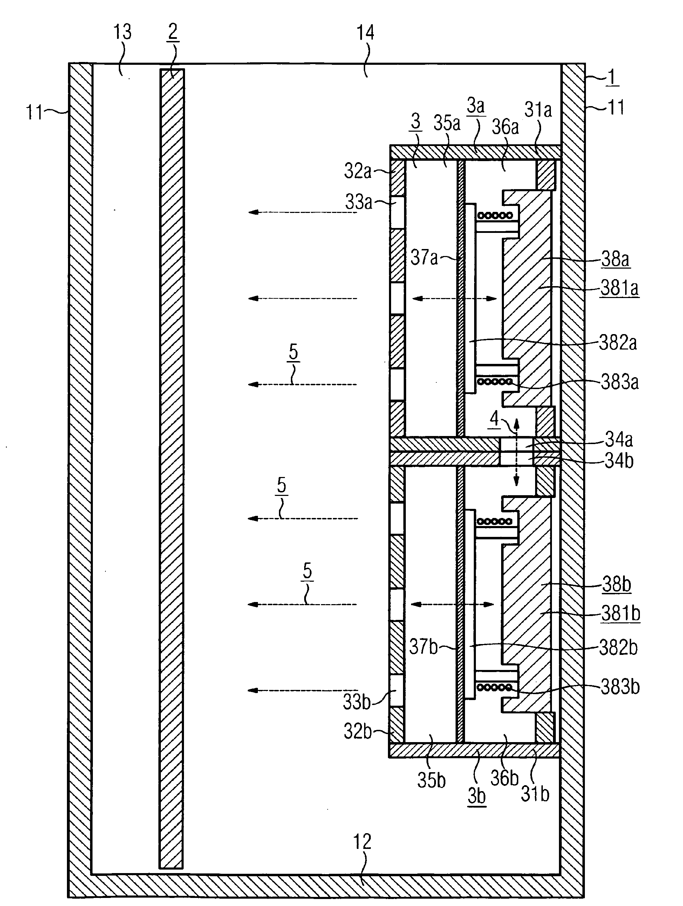

Das Gehäuse 1 kann eine Vielzahl von elektrischen Elementen enthalten, die thermische Verlustwärme erzeugen und somit entwärmt werden müssen. Als ein beispielhaftes Einbauteil 2 dieser Art ist in Figur 1 eine vertikal eingebaute elektronische Leiterplatte symbolisch dargestellt. Zu deren Entwärmung ist auf der Innenseite der gegenüber liegenden rechten vertikalen Seitenwand ein gemäß der Erfindung aufgebauter Schwingmembranlüfter 3 aufgesetzt. Dieser weist beispielhaft eine Kombieinheit aus zwei Teileinheiten 3a, 3b auf.

Gemäß einer in der Figur bereits dargestellten vorteilhaften Ausführungsform der Erfindung verfügt jede Teileinheit 3a, 3b des Schwingmembranlüfters 3 über ein eigenständiges Teilgehäuse 31a, 31b. Diese werden jeweils von einer Schwingmembran 37a, 37b in eine Düsen- bzw. Aktuatorkammer 35a, 35b bzw. 36a, 36b geteilt. Die von den Schwingmembranen erzeugten Luftpulsierungen 5 werden über die zugeordnete Düsenkammer 35a, 35b in den Innenraum des Gehäuses 1 abgegeben. Hierzu weist die Oberseite 32a, 32b eines jeden Teilgehäuses 31a, 31b vorteilhaft Düsenöffnungen 33a, 33b auf.

Die jeweilige Schwingmembran 37a, 37b wird von einem Magnetsystem 38a, 38b angeregt, das in der Aktuatorkammer 36a, 36b des entsprechenden Teilgehäuses 31a, 31b untergebracht ist. Erfindungsgemäß sind die Aktuatorkammern 36a, 36b der Teileinheiten 3a, 3b nach außen gekapselt und über Mittel zum Druckausgleich 34a, 34b unter einander verbunden. Die Magnetsysteme 38a, 38b der Teileinheiten 3a, 3b werden in der oben beschriebenen Weise phasenverschoben angeregt. Bei der in der Figur dargestellten Ausführung sind die Mittel zum Druckausgleich in Form von übergehenden Druckausgleichskanälen 34a, 34b in den Seitenwänden der Teilgehäuse 31a, 31b ausgeführt.

Die im Beispiel der Figur dargestellten Magnetsysteme 38a, 38b weisen jeweils eine scheibenförmige Magnetscheibe 381a, 381b mit einer Ringnut auf, in welche jeweils ein ringförmiger Spulenträger 382a, 382b berührungslos eintaucht. Dieser ist mit einer beispielhaft zylindrischen Spulenwicklung 383a, 383b belegt, welche von einer Wechselspannung mit einstellbarer Frequenz und Phasenlage angeregt wird. Die Schwingmembranen 37a, 37b sind auf einer, der jeweiligen Aktuatorkammer 36a, 36b zugewanderten Seite mit dem Spulenträger 382a, 382b des jeweiligen Magnetsystems 38a, 38b in der Art verbunden, dass dieser ohne Berührung in die jeweilige Ringnut eintauchen können. Zur Erzeugung von Luftpulsierungen 5 werden die Spulenwicklungen 383a, 383b mit einer Wechselspannung erregt, so dass der jeweilige Spulenträger 382a, 382b ohne Reibung in der jeweiligen Ringnut in Schwingungen kommen kann.

Das in der Figur dargestellte Gehäuse 1 und der beispielhafte Schwingmembranlüfter 3 sind gemäß einer weiteren vorteilhaften Ausführung der Erfindung in einer besonders vorteilhaften Weise aneinander angepasst. Hierzu weisen die Aktuatorkammern 36a, 36b der Teileinheiten 3a, 3b des Schwingmembranlüfters 3 keine Böden auf, so dass die Magnetsysteme der Teileinheiten 3a, 3b nun über deren jeweilige Magnetscheibe 381a, 381b direkt auf die Innenseite der rechten vertikalen Seitenwand 11 aufgelegt sind. Die in diesem Fall topfförmigen, nach unten hin offenen Teilgehäuse 31a, 31b sind über den jeweiligen Rand auf der Innenseite der rechten Seitenwand 11 des Gehäuses aufgesetzt und druckfest abgedichtet.

Eine solche Ausführung hat den Vorteil, dass aufgrund des Verzichts auf einen separaten Boden die Bauhöhen der Teilgehäuse des erfindungsgemäßen Schwingmembranlüfters 3 reduziert werden können. Dies ist beim Einbau in besonders flache Gehäuse von Vorteil, zum Beispiel bei speicherprogrammierbaren Steuerungen bzw. Notebookcomputern.

## Patentansprüche

1. Schwingmembranlüfter (3) mit zumindest zwei Teileinheiten (3a,3b), die jeweils eine Schwingmembran (37a,37b) aufweisen, welche von einem Magnetsystem (38a,38b) in einer Aktuatorkammer (36a,36b) angeregt und die davon erzeugte Luftpulsierung (5) nach außen abgegeben wird, wobei die Magnetsysteme (38a,38b) der Teileinheiten (3a,3b) phasenverschoben angeregt werden, **dadurch gekennzeichnet, dass**
• die Aktuatorkammern (36a,36b) der Teileinheiten (3a,3b) über Mittel zum Druckausgleich (34a,34b) verbunden und nach außen gekapselt sind.

2. Schwingmembranlüfter (3) nach Anspruch 1, wobei die zumindest zwei Teileinheiten (3a,3b) jeweils ein Teilgehäuse (31a,31b) aufweisen, welches von der Schwingmembran (37a,37b) in eine Düsen- bzw. Aktuatorkammer (35a,35b; 36a,36b) geteilt ist, wobei die Luftpulsierung (5) über die Düsenkammer (35a,35b) nach außen abgegeben wird.

3. Schwingmembranlüfter (3) nach Anspruch 1 oder 2, wobei die Mittel zum Druckausgleich (34a,34b) der Aktuatorkammern (36a,36b) der Teilgehäuse (31a,31b) als zumindest ein Druckausgleichskanal (34a, 34b) ausgeführt sind.

4. Gehäuse (1) zur Aufnahme von Verlustwärme abgebenden Elementen, insbesondere von Elektronikbaugruppen, mit einem Schwingmembranlüfter (3) nach einem der vorangegangenen Ansprüche, wobei die Aktuatorkammern (36a,36b) der Teileinheiten (3a,3b) nach unten hin offen und zur Kapselung dicht auf der Innenseite einer Seitenwand (11) des Gehäuses (1) aufgesetzt sind.

## Claims

1. Oscillating diaphragm fan (3) with at least two subunits (3a, 3b) which have in each case an oscillating diaphragm (37a, 37b) which is excited by a magnetic system (38a, 38b) in an actuator chamber (36a, 36b), the air pulsation (5) generated by it being discharged outward, the magnetic systems (38a, 38b) of the subunits (3a, 3b) being excited with a phase shift, **characterized in that**
the actuator chambers (36a, 36b) of the subunits (3a, 3b) are connected via means for pressure compensation (34a, 34b) and being encapsulated outwardly.

2. Oscillating diaphragm fan (3) according to Claim 1, the at least two subunits (3a, 3b) having in each case a sub-housing (31a, 31b) which is divided by the oscillating diaphragm (37a, 37b) into a nozzle chamber or actuator chamber (35a, 35b; 36a, 36b), the air pulsation (5) being discharged outward via the nozzle chamber (35a, 35b).

3. Oscillating diaphragm fan (3) according to Claim 1 or 2, the means for pressure compensation (34a, 34b) of the actuator chambers (36a, 36b) of the sub-housings (31a, 31b) being designed as at least one pressure compensation duct (34a, 34b).

4. Housing (1) for the reception of elements, in particular of electronic subassemblies, which discharge loss heat, with an oscillating diaphragm fan (3) according to one of the preceding claims, the actuator chambers (36a, 36b) of the subunits (3a, 3b) being open downward and, for encapsulation, being put in place sealingly on the inside of a side wall (11) of the housing (1).

## Revendications

1. Ventilateur ( 3 ) à membrane vibrante, comprenant au moins deux sous-unités ( 3a, 3b ), qui ont respectivement une membrane ( 37a, 37b ) vibrante, qui est excitée par un système ( 38a, 38b ) d'aimant dans une chambre ( 36a, 36b ) d'actionneur et qui émet vers l'extérieur une pulsation ( 5 ) d'air qui en est produite, les systèmes ( 38a, 38b ) d'aimant des sous-unités ( 3a, 3b ) étant excités de manière déphasée, **caractérisé en ce que**
• les chambres ( 36a, 36b ) d'actionneur des sous-unités
( 3a, 3b ) sont reliées par des moyens de compensation ( 34a, 34b ) de la pression et sont encapsulées vis-à-vis de l'extérieur.

2. Ventilateur ( 3 ) à membrane vibrante suivant la revendication 1, dans lequel les au moins deux sous-unités ( 3a, 3b ) ont respectivement un sous-boîtier ( 31a, 31b ), qui est subdivisé par la membrane ( 37a, 37b ) vibrante en une chambre ( 35a, 35b ; 36a, 36b ) de buse et d'actionneur, la pulsation ( 5 ) d'air étant émise vers l'extérieur par cette chambre ( 35a, 35b ) de buse.

3. Ventilateur ( 3 ) à membrane vibrante suivant la revendication 1 ou 2, dans lequel les moyens de compensation ( 34a, 34b ) de la pression des chambres ( 36a, 36b ) d'actionneur des sous-boîtier ( 31a, 31b ) sont réalisés sous la forme d'au moins un canal ( 34a, 34b ) de compensation de la pression.

4. Boîtier ( 1 ) de réception d'éléments cédant de la chaleur perdue, notamment de modules électroniques, comprenant un ventilateur ( 3 ) à membrane vibrante suivant l'une des revendications précédentes, les chambres ( 36a, 36b ) d'actionneur des sous-unités ( 3a, 3b ) étant ouvertes vers le bas et, pour l'encapsulation, étant mises de manière étanche sur la face intérieure d'une paroi ( 11 ) latérale du boîtier ( 1 ).
